# EUROPÄISCHE PATENTSCHRIFT

(11) **EP 4 364 400 B1**
(45) Veröffentlichungstag und Bekanntmachung des Hinweises auf die Patenterteilung: **19.02.2025**
(21) Anmeldenummer: 22743763.9
(22) Anmeldetag: 29.06.2022
(51) Int. Cl.: H04N 1/405, H04N 1/407, H04N 1/60

(54) **VERFAHREN ZUR FARBKORREKTUR EINES DIGITALDRUCKES**
METHOD FOR COLOUR CORRECTION OF DIGITAL PRINTING
PROCÉDÉ DE CORRECTION COLORIMÉTRIQUE D'UNE IMPRESSION NUMÉRIQUE

(30) Priorität: 30.06.2021 EP 21182815
(43) Veröffentlichungstag der Anmeldung: 08.05.2024
(73) Patentinhaber: Akzenta Paneele + Profile GmbH, 56759 Kaisersesch (DE)
(72) Erfinder: KLEMM, Markus, 33619 Bielefeld (DE); LINNENBRÜGGER, Timo, 56812 Cochem (DE); HANNIG, Hans-Jürgen, 51427 Bergisch Gladbach (DE)
(74) Vertreter: Michalski Hüttermann & Partner Patentanwälte mbB
(86) Internationale Anmeldenummer: PCT/EP2022/067920
(87) Internationale Veröffentlichungsnummer: WO 2023/275156

(56) Entgegenhaltungen:
- EP-A2- 1 365 574
- EP-A2- 3 199 347
- DE-A1- 102018 202 045

## Beschreibung

Die vorliegende Erfindung betrifft ein Verfahren zur Farbkorrektur eines Digitaldruckes und
eine Vorrichtung zur Durchführung des Verfahrens.

Verfahren zur Farbkorrektur von Digitaldrucken sind an sich bekannt. Dabei werden Abweichungen von dem erwarteten Druckergebnis ermittelt und beim Druck derart berücksichtigt, dass der Druck mehr dem erwarteten Druckergebnis entspricht.

Ein großes Problem bei der Ausgabe von Digitalbildern ist es beim wiederholten Drucken eines Digitalbildes, auch nach längeren Pausen, Drucke zu erreichen, die möglichst geringe Abweichungen zu einem Referenzdruck aufweisen. Die Gründe für auftretende Abweichungen sind vielfältiger Natur, beispielsweise kann der Druckuntergrund bezüglich Farbe und Verlaufseigenschaften Unterschiede aufweisen oder der Drucker kann sich über die Zeit verändern.

Um aktuelle farblichen Abweichungen schnell korrigieren zu können, kann z.B. an Systemen die auf einem Tintenstrahldrucker basieren mit Hilfe einer Einstellung der Druckkopfspannung eine farbliche Korrektur vorgenommen werden. Dieses verändert aber den optimalen Arbeitspunkt des Druckkopfes und kann somit nur bedingt korrigierend eingesetzt werden.

Eine andere Möglichkeit ist mit Hilfe des zum Ausgabegerätes gehörenden Colormanagements neue farblich korrigierte Druckdaten zu erzeugen. Je nach Integration des Colormanagements in die Druckmaschine, der Zugänglichkeit der Druckmaschinenbediener auf das Colormanagement, sowie die Schnelligkeit des Colormanagements und der Gesamtgröße der digitalen Bilddatei, kann dieser Prozess aber ein nicht unerhebliche Zeit in Anspruch nehmen.

Andere Verfahren, die ein Zurückgreifen auf das Colormanagement zu vermeiden versuchen umfassen ein Senden von Korrektursignalen an die Druckkopfsteuerung, welche die Korrektur durch Anpassung von Anzahl und/oder Größe von Druckpunkten umsetzt. Ein Problem derartiger Verfahren ist jedoch, dass zur Umsetzung gegebenenfalls besondere Hardware notwendig ist. Ferner können derartige Verfahren Prozessbedingt die Korrektur nicht in Vorschubrichtung des Druckes und entlang der Druckbreite gleich berücksichtigen. Dadurch kann es zu Nachteilen im Druckergebnis kommen. Insbesondere können mit derartigen Verfahren besonders kleine Korrekturen die wegen diskreter Druckpunktgrößen auf mehrere Druckpunkte verteilt werden, nicht gleichmäßig in Druckvorschubrichtung und entlang der Druckbreite verteilt werden, wodurch Artefakte entstehen können.

Dokument EP 3 199 347 A2 offenbart in diesem Zusammenhang ein Senden von Korrektursignalen an die Druckkopfsteuerung an sich, welche die Korrektur umsetzt.

Verfahren zur Farbkorrektur von Digitaldrucken können somit noch Verbesserungspotential bieten. Verbesserungspotential kann sich insbesondere darin bieten, dass die Farbkorrektur schneller und einfacher erfolgen kann, insbesondere ohne dass auf den vorgelagerten Colormanagement-Prozess zurückgegriffen werden muss und/oder die Druckkopfspannung angepasst werden muss.

Gelöst wird diese Aufgabe durch das Verfahren zur Farbkorrektur eines Digitaldruckes gemäß Anspruch 1 sowie ferner durch die Vorrichtung nach Anspruch 13. Bevorzugte Ausgestaltungen der Erfindung sind in den Unteransprüchen und in der Beschreibung angegeben.

Mit der Erfindung wird ein Verfahren zur Farbkorrektur eines Digitaldruckes vorgeschlagen, wobei in einem ersten Schritt ein vorgegebenes Digitalbild einem Digitaldrucker als farbsepariertes Digitalbild mit zumindest einem Farbkanalbild bereitgestellt wird, wobei jedes Farbkanalbild einem Druckfarbkanal des Digitaldruckers zugeordnet ist und Informationen über Druckposition und Druckgröße der vom Drucker zu setzende Druckpunkte des entsprechenden Druckfarbkanals aufweist und wobei ein Druckpunkt durch seine Druckposition und Druckpunktgröße definiert ist, wobei das Verfahren weiter die Schritte aufweist:
a) Bereitstellen von Korrekturdaten für den Digitaldruck, wobei die Korrekturdaten zumindest einen Korrekturwert für zumindest ein Farbkanalbild umfassen,
b) Anwenden der Korrekturdaten auf das farbseparierte Digitalbild, wobei ein farbkorrigiertes farbsepariertes Digitalbild erhalten wird,
c) Drucken des farbkorrigierten farbseparierten Digitalbildes mit dem Digitaldrucker, wobei der Korrekturwert auf die für das Farbkanalbild vorgesehenen Druckpunkte durch Anpassung der Druckpunktgrößen von zumindest einem Teil der Druckpunkte des Farbkanalbildes in Abhängigkeit des Korrekturwertes angewendet wird.

Unter einem Digitaldruck wird im Sinne der vorliegenden Erfindung insbesondere ein Digitaldruckverfahren verstanden, also ein Verfahren zum Drucken eines Digitalbildes mit einem Digitaldrucker.

Unter einem Digitaldrucker wird im Sinne der vorliegenden Erfindung insbesondere eine Vorrichtung verstanden, die farbige Druckpunkte auf einem Substrat ausgeben kann, die das entsprechende Bild ausbilden.

Unter einem Digitalbild wird im Sinne der vorliegenden Erfindung insbesondere ein digital speicherbares Bild verstanden, dessen Bildinformationen über Bildpunkte bestimmt sind, die jeweils einen Farbwert bezüglich eines Farbsystems aufweisen. Ein vorgegebenes Digitalbild ist im Sinne der vorliegenden Erfindung ein Digitalbild das zum Drucken vorgesehen ist. Beispielsweise kann das vorgegebene Digitalbild ein pixelbasiertes oder ein vektorbasiertes Digitalbild sein.

Darunter, dass das vorgegebenen Digitalbild dem Digitaldrucker als farbsepariertes Digitalbild mit zumindest einem Farbkanalbild bereitgestellt wird, wobei jedes Farbkanalbild einem Druckfarbkanal des Digitaldruckers zugeordnet ist und Informationen über vom Drucker zu setzende Druckpunkte des entsprechenden Druckfarbkanals aufweist und wobei ein Druckpunkt durch seine Druckposition und Druckpunktgröße definiert ist, ist im Sinne der vorliegenden Erfindung zu verstehen, dass das vorgegebene Digitalbild dem Digitaldrucker insbesondere als Digitalbild bereitgestellt wird, das einem RIP-Prozess (Raster Image Processor, Rastergrafikprozessor) entstammt, das also entsprechend der gewünschten Druckart schon an die Druckfarbkanäle des Digitaldruckers und beispielsweise auch an die Druckauflösung des Druckers angepasst ist. Entsprechend kann unter einem Druckpunkt im Sinne der vorliegenden Erfindung ein tatsächlich vom Drucker zu druckender Punkt verstanden werden.

Im Sinne der vorliegenden Erfindung kann demnach insbesondere unterschieden werden zwischen dem vorgegebenen Digitalbild, welches über Bildpunkte mit Farbwerten definiert ist, und dem farbsepariertem Digitalbild, dessen Farbkanalbilder über Druckpunkte definiert sind.

Unter einem Farbkanalbild ist im Sinne der vorliegenden Erfindung ist insbesondere ein Teil des Digitalbildes zu verstehen der nur die Informationen zu einem Farbkanal des Farbsystems aufweist in dem das Digitalbild gespeichert ist. Beispielsweise kann das Digitalbild über Farbwerte im CMYK Farbsystem definiert sein und ein Farbkanalbild weist beispielsweise nur die Farbwerte des C-Farbkanals auf.

Unter einem Druckfarbkanal ist im Sinne der vorliegenden Erfindung insbesondere ein Farbkanal zu verstehen, in dem der Drucker drucken kann. Beispielsweise kann der Drucker zum Drucken im CMYK Farbsystem vorgesehen sein und ein Druckfarbkanal kann der C-Farbkanal sein.

Es ist also in anderen Worten insbesondere vorgesehen, dass das Digitalbild aus solchen Farbkanalbildern zusammengestellt ist, die den Druckfarbkanälen des Digitaldruckers entsprechen. Beispielsweise kann vorgesehen sein, dass das Digitalbild im CMYK Farbsystem über die Farbkanalbilder des C-Farbkanals und des M-Farbkanals bestimmt ist und der Drucker ein Drucker ist, der im CMYK Farbsystem drucken kann. Somit wird den Farbkanalbildern C und M des Digitalbildes jeweils der Druckfarbkanal C und M zugeordnet.

In anderen Worten wird also das vorgegebenen Digitalbild dem Digitaldrucker so als farbsepariertes Digitalbild bereitgestellt, dass es direkt für das Drucken auf dem Digitaldrucker geeignet ist, und entsprechende Informationen über die zu setzenden Druckpunkte der Druckfarbkanäle aufweist.

Es kann dadurch vorteilhafterweise erreicht werden, dass das vorgegebenen Digitalbild direkt gedruckt werden kann und nicht auf das ursprüngliche vorgegebene Digitalbild zurückgegriffen werden muss.

Das Verfahren weist die Schritte auf:
a) Bereitstellen von Korrekturdaten für den Digitaldruck, wobei die Korrekturdaten zumindest einen Korrekturwert für zumindest ein Farbkanalbild umfassen,
b) Anwenden der Korrekturdaten auf das farbseparierte Digitalbild, wobei ein farbkorrigiertes farbsepariertes Digitalbild erhalten wird,
c) optional Drucken des farbkorrigierten farbseparierten Digitalbildes mit dem Digitaldrucker.

Unter dem Bereitstellen von Korrekturdaten für den Digitaldruck ist im Sinne der vorliegenden Erfindung insbesondere ein Bereitstellen von Daten zu verstehen, die dazu geeignet sind farbliche Abweichungen von einem Druck des vorgegebenen Digitalbildes zum vorgegebenen Digitalbild zu beschreiben.

Unter dem Anwenden der Korrekturdaten auf das farbseparierte Digitalbild ist im Sinne der vorliegenden Erfindung insbesondere zu verstehen, dass das farbseparierte Digitalbild unter Anwendung der Korrekturdaten so verändert wird, dass das farbkorrigierte farbseparierte Digitalbild die Korrekturdaten so berücksichtigt, dass die farblichen Abweichungen vom Druck des vorgegebenen Digitalbildes beim Druck des farbkorrigierten farbseparierten Digitalbildes korrigiert werden. In anderen Worten ist darunter zu verstehen, dass das farbseparierte Digitalbild, welches insbesondere bereits durch einen RIP-Prozess aus dem vorgegebenen Digitalbild erhalten wurde, direkt unter Anwendung der Korrekturdaten erneut einem RIP-Prozess unterzogen wird. Insbesondere werden die Korrekturdaten nicht auf das originale vorgegebene Digitalbild angewendet.

Unter einem Korrekturwert wird dabei im Sinne der vorliegenden Erfindung insbesondere ein Wert verstanden, der proportional zu einer Farbabweichung einer Farbe eines mit dem Digitaldrucker gedruckten Bildes, insbesondere auch in Abhängigkeit der Druckposition, zu der Farbe des für den Druck verwendeten Bildes ist. In anderen Worten ist ein Korrekturwert im Sinne der vorliegenden Erfindung insbesondere proportional zu einer Farbabweichung, wobei die Farbabweichung in Abhängigkeit der Druckposition angegeben sein kann. Insbesondere kann der Korrekturwert in Abhängigkeit des verwendeten Druckers, eines zur Bestimmung der Farbabweichung verwendeten Messgerätes und/oder anderer für den Druck verwendeten Gerätschaften ein bestimmtes Verhältnis zur Farbabweichung aufweisen. Das Verhältnis des Korrekturwertes zur Farbabweichung kann dabei bevorzugt durch Referenzmessungen bestimmt werden.

Durch das vorgeschriebenen Verfahren kann vorteilhafterweise erreicht werden, dass die Farbkorrektur vergleichsweise schneller und einfacher erfolgen kann. Insbesondere kann dadurch, dass die Korrekturdaten auf das farbseparierte Digitalbild angewendet werden erreicht werden, dass nicht auf den vorgelagerten Colormanagement-Prozess zurückgegriffen werden muss, also insbesondere auch nicht auf die originalen Daten des vorgegebenen Digitalbildes zurückgegriffen werden muss, und zudem die Druckkopfspannung nicht für die Farbkorrektur angepasst werden muss. Dadurch, dass nicht auf das originale vorgegebene Digitalbild zurückgegriffen werden muss, kann besonders viel Zeit gespart werden. Beispielsweise kann das Verfahren je nach Rechnergeschwindigkeit und Bildgröße innerhalb weniger Sekunden komplett neue farbkorrigierte farbseparierte Druckdateien erzeugen, welche dann umgehend gedruckt werden können. Die originalen Bilddateien, als auch die ursprünglich gerippten farbseparierten Bilddateien bleiben hierbei erhalten.

Bevorzugt kann vorgesehen sein, dass die Informationen über die vom Drucker zu setzenden Druckpunkte Druckpositionen und Druckpunktgrößen der zu setzenden Druckpunkte umfassen.

Bevorzugt kann vorgesehen sein, dass das Anwenden der Korrekturdaten auf das farbseparierte Digitalbild das farbseparierte Digitalbild als ganzes berücksichtigt. In anderen Worten wird beim Anwenden der Korrekturdaten nicht nur ein Teil, Ausschnitt, oder dergleichen des farbseparierten Digitalbildes verwendet sondern die Korrekturdaten werden auf das farbseparierte Digitalbild insgesamt angewendet. Insbesondere kann bevorzugt vorgesehen sein, dass das erhaltene farbkorrigierte farbseparierte Digitalbild als ganzes erhalten wird. Beispielsweise kann bevorzugt vorgesehen sein, dass das farbkorrigierte farbseparierte Digitalbild das gleiche Speicherformat aufweist wie das ursprüngliche farbseparierte Digitalbild.

Durch das Vorbeschriebene kann insbesondere erreicht werden, dass das Verfahren ohne besondere Steuerhardware angewendet werden kann. Insbesondere kann das farbkorrigierte farbseparierte Digitalbild genau so gedruckt werden, wie ursprünglich das farbseparierte Digitalbild. Dadurch ist das Verfahren besonders flexibel einsetzbar. Ferner kann dadurch erreicht werden, dass Korrekturen unabhängig von der Druckrichtung des vorgegebenen Digitalbildes umgesetzt werden können. Zudem kann erreicht werden, dass auch besonders kleine Korrekturen die wegen diskreter Druckpunktgrößen auf mehrere Druckpunkte verteilt werden müssen, gleichmäßig in Druckvorschubrichtung und entlang der Druckbreite verteilt werden, wodurch besonders wenige Artefakte entstehen.

Bevorzugt kann vorgesehen sein, dass für Schritt c) das farbkorrigierte farbseparierte Digitalbild dem Digitaldrucker als ganzes zur Verfügung gestellt wird. Insbesondere kann vorgesehen sein, dass das farbkorrigierte farbseparierte Digitalbild dem Digitaldrucker so zur Verfügung gestellt wird, wie für einen Druck ohne Korrektur für das farbseparierte Digitalbild vorgesehen wäre. Dadurch können sich die vorgenannten Vorteile ebenfalls ergeben. Insbesondere kann dadurch erreicht werden, dass das Verfahren besonders flexibel einsetzbar ist.

Auch ist vorgesehen, dass der Korrekturwert auf die für das Farbkanalbild vorgesehenen Druckpunkte angewendet wird, und zwar durch Anpassung der Druckpunktgrößen von zumindest einem Teil der Druckpunkte des Farbkanalbildes in Abhängigkeit des Korrekturwertes.

Dadurch kann erreicht werden, dass die Farbkorrektur besonders einfach durchgeführt werden kann.

Beispielsweise kann vorgesehen sein, dass das Digitalbild im CMYK Farbsystem über die Farbkanalbilder des C-Farbkanals und des M-Farbkanals bestimmt ist und der Drucker ein Drucker ist, der im CMYK Farbsystem drucken kann, wobei die bereitgestellten Korrekturdaten beispielsweise beschreiben, dass das gedruckte Bild einen im Vergleich zum vorgegebenen Digitalbild zu starken C-Anteil aufweist. Der Korrekturwert umfasst dann beispielsweise für den C-Farbkanal einen negativen Wert, der auf die Druckpunktgrößen der Druckpunkte des C-Farbkanalbildes angewendet wird, indem Druckpunkte des C-Farbkanals verkleinert werden. Somit weist das farbkorrigierte farbseparierte Digitalbild im Vergleich zum farbseparierten Digitalbild einen niedrigeren C-Anteil auf. Bei einem Druck des farbkorrigierten farbseparierten Digitalbildes weist der Druck dann den eigentlich für den Druck des vorgegebenen Digitalbildes gewollten C-Anteil auf.

Indem die Korrekturwerte direkt auf die Druckpunktgrößen angewendet werden, kann erreicht werden, dass das Verfahren besonders einfach und schnell durchgeführt werden kann.

Bevorzugt kann vorgesehen sein, dass der Korrekturwert nicht auf die Druckpunktgröße von Druckpunkten angewendet wird, deren Druckpunktgröße 0 ist.

Unter Druckpunkten mit einer Druckpunktgröße von 0 werden Druckpunkte verstanden, für die gemäß dem farbseparierten Digitalbild vorgesehen ist, dass überhaupt kein Druckpunkt an dieser Stelle für zumindest den betroffenen Farbkanal gesetzt wird.

Dadurch kann erreicht werden, dass die Korrekturwerte nicht auf Stellen des farbseparierten Digitalbildes angewendet werden, die den Farbwert für Weiß aufweisen. Somit kann erreicht werden, dass die Farbkorrektur besonders effizient ist und nicht zugleich farbliche Artefakte erzeugt werden.

Bevorzugt kann vorgesehen sein, dass die Druckpunktgrößen der Druckpunkte der Farbkanalbilder eine begrenzte Anzahl diskreter Druckpunktgrößenwerte annehmen können, insbesondere eine durch den Digitaldrucker begrenzte Anzahl.

Unter einer begrenzten Anzahl diskreter Druckpunktgrößenwerte ist zu verstehen, dass die Druckpunkte nur eine endliche Zahl verschiedener Druckpunktgrößenwerte annehmen können. Beispielsweise kann der Digitaldrucker dafür vorgesehen sein, nur Druckpunkte in kleiner oder gleich 255 verschiedenen Druckpunktgrößen zu drucken. Dabei sind Digitaldrucker üblicherweise dazu ausgestaltet meist weniger als 20, insbesondere weniger als 10 verschiedene Druckpunktgrößen zu drucken.

Bevorzugt kann vorgesehen sein, dass der Korrekturwert beim Anwenden der Korrekturdaten derart auf die Druckpunktgrößen der Druckpunkte angewendet wird, dass nicht der Druckpunktgrößenwert jedes Druckpunktes verändert wird.

Dadurch kann erreicht werden, dass auch kleine Korrekturwerte bei der Farbkorrektur berücksichtigt werden, insbesondere Korrekturwerte, die kleiner sind als der Unterschied zwischen zwei aufeinanderfolgenden Druckpunktgrößenwerten.

Bevorzugt kann vorgesehen sein, dass der Korrekturwert derart angewendet wird, dass der Korrekturwert auf die für das Farbkanalbild vorgesehenen Druckpunkte verteilt wird, wobei das Verteilen des Korrekturwertes bevorzugt derart erfolgen kann, dass der über die Summe der Druckpunkte erreichte Farbunterschied insgesamt dem Korrekturwert entspricht.

Darunter ist insbesondere zu verstehen, dass der Korrekturwert beim Anwenden der Korrekturdaten derart auf die Druckpunktgrößen der Druckpunkte angewendet wird, dass die erfolgten Druckpunktgrößenänderungen insgesamt dem Korrekturwert entsprechen.

Beispielsweise können Korrekturwerte, die beim Anwenden auf einen Druckpunkt eine maximal mögliche Druckpunktgröße überschreiten würden, derart auf den Druckpunkt angewendet werden, dass dieser die maximal mögliche Druckpunktgröße zugeschrieben bekommt und die restliche Korrektur durch Vergrößerung weitere Druckpunkte in der Umgebung des Druckpunktes erreicht wird.

Weiter beispielswese können Korrekturwerte, die nicht einem diskreten Druckpunktunterschied zwischen zwei Druckpunktgrößen entsprechen, derart angewendet werden, dass beispielsweise nicht die Druckpunktgröße aller Druckpunkte angepasst wird, sondern insbesondere nur jedes zweiten, dritten, vierten, oder fünften Druckpunktes. Derart kann erreicht werden, dass auch kleine Korrekturwerte insgesamt angewendet werden können.

In anderen Worten kann der Korrekturwert, mit den erfolgten Druckpunktgrößenänderungen für die Druckpunkte des Farbkanalbildes dargestellt werden.

Bevorzugt kann vorgesehen sein, dass das Verteilen des Korrekturwertes auf die für das Farbkanalbild vorgesehenen Druckpunkte nach dem gleichen RIP-Prozess erfolgt, der dem vorgegebene Digitalbild zu Grunde liegt.

Dadurch kann erreicht werden, dass das Verteilen des Korrekturwertes auf die für das Farbkanalbild vorgesehenen Druckpunkte automatisch die Positionen der Druckpunkte des Farbkanalbildes berücksichtigt und/oder die begrenzte Anzahl diskreter Druckpunktgrößenwerte.

In anderen Worten bleibt die Anzahl und Position der ursprünglich definierten Druckpunkte erhalten und bei allen, oder nur bei einem Teil der Druckpunkte wird die Druckpunktgröße erhöht oder verkleinert.

Bevorzugt kann vorgesehen sein, dass für das Verteilen des Korrekturwertes auf die für das Farbkanalbild vorgesehenen Druckpunkte nacheinander, insbesondere nach einer vorgegebenen Reihenfolge, für jeden Druckpunkt des Farbkanalbildes bestimmt wird, um welche Druckpunktgröße der Druckpunkt verändert werden soll.

Bevorzug kann vorgesehen sein, dass beim Anwenden des Korrekturwertes für die jeweilige Druckpunktposition diese Position nur die gleiche begrenzte Anzahl an Druckpunktgrößenwerten annehmen kann wie die Druckpunkte.

Bevorzugt kann vorgesehen sein, dass die vorgegebene Reihenfolge entsprechend dem gleichen RIP-Prozess erfolgt, der dem vorgegebene Digitalbild zu Grunde liegt.

Bevorzugt kann vorgesehen sein, dass beim nacheinander Anwenden des für die jeweilige Druckposition bestimmten Korrekturwertes, für den Fall, dass der Korrekturwert für eine bestimmte Druckpunktposition einen Schwellwert erreicht, der Druckpunktgrößenwert des Druckpunktes des Farbkanalbildes mit der entsprechenden Druckpunktposition beim Anwenden der Korrekturdaten entsprechend erhöht oder erniedrigt wird.

In anderen Worten kann demnach vorgesehen sein, dass durch die Anwendung der Korrekturdaten auf das farbseparierte Digitalbild nur dann die Druckpunktgröße eines Druckpunktes beim Verteilen des Korrekturwertes angepasst wird, wenn der entsprechende Korrekturwert für die Druckpunktposition des entsprechenden Druckpunktes einen bestimmten Schwellwert erreicht.

Dadurch kann erreicht werden, dass eine durch die Drucktechnik begrenzte Anzahl an Druckpunktgrößen angemessen in der Farbkorrektur berücksichtigt wird, so dass trotzdem eine effiziente Farbkorrektur möglich ist.

Bevorzugt kann vorgesehen sein, dass der Schwellwert dem Farbwertunterschied zwischen zwei aufeinanderfolgenden Druckpunktgrößenwerten entspricht, wobei für den Fall, dass der Korrekturwert das n-Fache des Schwellwertes erreicht, der Druckpunktgrößenwert der Druckpunkte des Farbkanalbildes beim Anwenden der Korrekturdaten entsprechend um n Druckpunktgrößenwerte erhöht oder erniedrigt wird, wobei n eine natürliche Zahl ist.

Unter aufeinanderfolgenden Druckpunktgrößenwerten sind im Sinne der vorliegenden Erfindung die Größenwerte von einer möglichen Druckpunktgröße und von der nächstgrößeren oder nächstkleineren Druckpunktgröße zu verstehen.

Dadurch kann erreicht werden, dass die Farbkorrektur proportional auch bei kleinen und bei großen Druckpunkten gut erfolgt und auch bei kleinen und großen Korrekturwerten besonders effizient ist.

Bevorzugt kann vorgesehen sein, dass beim nacheinander Anwenden des für die jeweilige Druckposition bestimmten Korrekturwertes, für den Fall, dass der Korrekturwert für eine bestimmte Druckpunktposition den Schwellwert nicht erreicht, der Druckpunktgrößenwert des Druckpunktes des Farbkanalbildes mit der entsprechenden Druckpunktposition beim Anwenden der Korrekturdaten entsprechend nicht erhöht oder erniedrigt wird, wobei der Korrekturwert für das Bestimmen des nächsten Druckpunktes mit berücksichtigt wird.

In anderen Worten kann vorgesehen sein, dass bei Korrekturwerten, die kleiner sind als der kleinste Druckpunktgrößenunterschied, der Korrekturwert, beim nacheinander Bestimmen um welche Druckpunktgröße ein Druckpunkt verändert werden soll, so lange akkumuliert bzw. auf andere Druckpunkte verteilt wird, bis der Schwellwert erreicht wird und der Druckpunktgrößenwert des entsprechenden Druckpunktes erhöht oder erniedrigt wird.

Bevorzugt kann vorgesehen sein, dass der Korrekturwert mit einem Algorithmus auf verschiedene noch nicht korrigierte Druckpunkte verteilt wird, beispielsweise mit einem Fehler-Verteilungsalgorithmus.

Bevorzugt kann vorgesehen sein, dass beim nacheinander Bestimmen um welche Druckpunktgröße ein Druckpunkt verändert werden soll, für den Fall, dass der Korrekturwert das n-Fache des Schwellwertes überschreitet, die Differenz des n-Fachen Schwellwertes und des Korrekturwertes für das Bestimmen des nächsten Druckpunktes mit berücksichtigt wird.

In anderen Worten kann vorgesehen sein, dass bei Korrekturwerten, die nicht genau einem möglichen Druckpunktgrößenunterscheid entsprechen, der restliche Korrekturwert, beim nacheinander Bestimmen um welche Druckpunktgröße ein Druckpunkt verändert werden soll, so lange akkumuliert bzw. verteilt wird, bis die akkumulierten restlichen Korrekturwerte den Schwellwert erreichen und der Druckpunktgrößenwert des entsprechenden Druckpunktes um n+1 Druckpunktgrößenwerte erhöht oder erniedrigt wird.

Bevorzugt kann vorgesehen sein, dass für den Fall, dass der Druckpunktgrößenwert eines Druckpunktes beim Anwenden der Korrekturdaten kleiner werden soll als der kleinste mögliche Druckpunktgrößenwert, die Druckpunktgröße des Druckpunktes auf die Druckpunktgröße 0 gesetzt wird.

Darunter ist im Sinne der vorliegenden Erfindung zu verstehen, dass an der entsprechenden Stelle im farbkorrigierten farbseparierten Digitalbild es vorgesehen ist, überhaupt kein Druckpunkt für zumindest den betroffenen Farbkanal zu setzen.

Bevorzugt kann vorgesehen sein, dass für den Fall, dass der Druckpunktgrößenwert eines Druckpunktes beim Anwenden der Korrekturdaten größer werden soll als der größte mögliche Druckpunktgrößenwert, die Druckpunktgröße des Druckpunktes auf den größten möglichen Druckpunktgrößenwert gesetzt wird.

Bevorzug kann vorgesehen sein, dass ein Anwenden der Korrekturwerte für die jeweilige Druckposition nur dann erfolgt, wenn sich an dieser Stelle im originalen gerasterten Bild ein Druckpunkt befindet, welcher eine Druckpunktgröße hat, die größer als Null ist.

Bevorzugt kann vorgesehen sein, dass beim Ändern des Druckpunktgrößenwerts der Druckpunkte des Farbkanalbildes beim Anwenden der Korrekturdaten ein Fehler-Verteilungsalgorithmus angewendet wird (Dithering), beispielsweise ein Floyd-Steinberg-Algorithmus.

Unter dem Anwenden eines Fehler-Verteilungsalgorithmus wird im Sinne der vorliegenden Erfindung verstanden, dass die Korrekturwerte gemäß einem Algorithmus, wie er auch im RIP-Prozess bei der Erstellung von farbseparierten Digitalbildern angewendet werden kann, auf benachbarte bzw. in der Nähe vorgesehene Druckpunkte verteilt werden. Dabei kann insbesondere vorgesehen sein, dass die Verteilung nicht nur auf Druckpunkte in der vorgesehenen Druckvorschubrichtung erfolgt, sondern unabhängig in jede Richtung, beispielsweise auch quer zur vorgesehenen Druckvorschubrichtung.

Dadurch kann erreicht werden, dass die Farbkorrektur eine gleichmäßigere Wirkung hat und Artefakte vermieden werden können.

Insbesondere kann bevorzugt vorgesehen sein, dass die Anwendung des Fehler-Verteilungsalgorithmus erfolgt in den Fällen, in denen der Druckpunktgrößenwert eines Druckpunktes beim Anwenden der Korrekturdaten kleiner werden soll als der kleinste mögliche Druckpunktgrößenwert und die Druckpunktgröße des Druckpunktes auf die Druckpunktgröße 0 gesetzt wird und/oder in denen der Druckpunktgrößenwert eines Druckpunktes beim Anwenden der Korrekturdaten größer werden soll als der größte mögliche Druckpunktgrößenwert und die Druckpunktgröße des Druckpunktes auf den größten möglichen Druckpunktgrößenwert gesetzt wird.

Dadurch kann erreicht werden, dass die Farbkorrektur auch in Bereichen mit hoher und niedriger Farbdichte besonders erfolgreich ist.

In einer bevorzugten Ausgestaltung kann vorgesehen sein, dass die Anwendung der Korrekturdaten auf das farbseparierte Digitalbild an jeder Stelle des Digitalbildes unabhängig von einer Farbdichte des farbseparierten Digitalbildes erfolgt.

Dadurch kann erreicht werden, dass die Farbkorrektur besonders einfach ist und trotzdem ein gutes Ergebnis erreicht werden kann.

In einer alternativen bevorzugten Ausgestaltung kann vorgesehen sein, dass die Anwendung der Korrekturdaten auf das farbseparierte Digitalbild in Abhängigkeit einer aus zumindest einem Farbkanalbild erzeugten Dichtekarte erfolgt, wobei die Dichtekarte Informationen über eine Farbdichte des Farbkanalbildes in Abhängigkeit der Druckposition umfasst. Unter dem Begriff Farbdichte kann im Sinne der vorliegenden Erfindung insbesondere eine Farbsättigung verstanden werden. In anderen Worten kann vorgesehen sein, dass ein Farbkanalbild derart verarbeitet wird, dass eine Farbsättigung in Abhängigkeit der Druckposition erhalten wird.

Dadurch kann erreicht werden, dass die Farbkorrektur weiter verbessert werden kann. Insbesondere kann die Farbkorrektur dadurch besonders genau auch in Bereichen mit sehr unterschiedlicher Farbdichte erfolgen.

Bevorzugt kann vorgesehen sein, dass die Dichtekarte erstellt wurde aus dem Farbkanalbild des farbseparierten Digitalbildes, wobei vorzugsweise mit einem Weichzeichner die Farbdichte in Abhängigkeit der Druckposition des Farbkanalbildes erhalten wird.

Dadurch kann erreicht werden, dass die Dichtekarte besonders unkompliziert und schnell erhalten werden kann, insbesondere ohne auf den vorgelagerten Colormanagement-Prozess und das originale vorgegebene Digitalbild zurückzugreifen.

Bevorzugt kann vorgesehen sein, dass die Korrekturdaten auf das Farbkanalbild des farbseparierten Digitalbildes in Abhängigkeit einer Gradationskurve angewendet werden.

Unter einer Gradationskurve ist im Sinne der vorliegenden Erfindung eine Kurve zu verstehen, die das Verhältnis von zumindest zwei Farbdichten zueinander beschreibt und vorliegend so zu verstehen ist, dass ein Faktor in Abhängigkeit der Farbdichte beschrieben wird, der auf den Korrekturwert angewendet werden kann.

Somit kann für die Farbkorrektur eine Gradationskurve verwendet werden, die die Stärke der Korrektur in Abhängigkeit der Farbdichte stellt. Beispielsweise kann die Gradationskurve vorsehen, dass die Bereiche mit einer geringeren Farbdichte proportional weniger korrigiert werden als die Bereiche hoher Farbdichte, oder umgekehrt.

Dadurch kann erreicht werden, dass sich Feinheiten der Farbkorrektur besonders schnell und einfach einstellen lassen.

Bevorzugt kann vorgesehen sein, dass der Korrekturwert abhängig von der Druckbreite des Digitaldruckers ist.

Dadurch kann vorteilhafterweise erreicht werden, dass Fehler korrigiert werden können, die insbesondere durch Schwankungen am Druckkopf des Digitaldruckers entlang der Druckbreite, also quer zur einer Druckvorschubrichtung, vorliegen.

Bevorzugt kann vorgesehen sein, dass das Bereitstellen der Korrekturdaten für den Digitaldruck in Schritt a) ein Drucken des farbseparierten Digitalbildes und/oder eines digitalen Testbildes mit dem Digitaldrucker umfasst und ein Erfassen von Farbwerten des gedruckten farbseparierten Digitalbildes und/oder digitalen Testbildes mit einem optischen Farbmessgerät, wobei die Korrekturwerte erstellt werden anhand von Abweichungen des für eine Druckposition gemessenen Farbwertes von dem für das vorgegebene Digitalbild und/oder das digitale Testbild an dieser Druckposition erwarteten Farbwert.

Unter einem digitalen Testbild ist ein vorgegebenes Digitalbild zu verstehen, dass so ausgestaltet ist, dass aus dem Druck des Testbildes besonders effizient Korrekturdaten gewonnen werden können.

Durch das vorbeschriebene Erfassen der Farbwerte kann erreicht werden, dass die Korrekturdaten besonders verlässlich sind.

Insbesondere kann vorgesehen sein, dass das Drucken auf dem gleichen Substrat erfolgt, auf dem auch das vorgegebene Digitalbild gedruckt werden soll.

Dadurch kann vorteilhafterweise erreicht werden, dass auch Effekte des Substrates bei der Farbkorrektur einfach berücksichtigt werden können.

Bevorzugt kann vorgesehen sein, dass die Schritte a) und b) mehrfach iterativ hintereinander durchgeführt werden. Dabei kann insbesondere vorgesehen sein, dass das Bereitstellen der Korrekturdaten eines auf Schritt b) folgenden Schrittes a) ein Drucken des farbkorrigierten farbseparierten Digitalbildes umfasst, wobei in dem darauffolgenden Schritt b) die Korrekturdaten auf das bereits farbkorrigierte farbseparierte Digitalbild angewendet werden und ein weiter farbkorrigiertes farbsepariertes Digitalbild erhalten wird.

Dadurch kann erreicht werden, dass die Farbkorrektur ein besonders homogenes Druckergebnis erreicht.

Besonders bevorzugt kann vorgesehen sein, dass die Schritte a) und b) iterativ durchgeführt werden, bis das Ergebnis der Korrektur gut genug ist. Insbesondere können die Schritte a) und b) so lange durchgeführt werden, bis die in Schritt a) bereitgestellten Korrekturwerte ausreichend klein sind.

Optional kann der Erfolg des Verfahrens überprüft werden, wobei mit den entsprechend angewendeten Korrekturdaten das vorgegebene Digitalbild gedruckt wird.

Bevorzugt kann vorgesehen sein, dass das optische Farbmessgerät ausgewählt ist aus der Gruppe bestehend aus einem Farbsensor, einem Kolorimeter, einem Spektralphotometer, einer Digitalkamera oder einem Spektraldensitometer, wobei das optische Farbmessgerät vorzugsweise auf dem gleichen Farbmodell wie der Digitaldrucker beruht.

Bevorzugt kann vorgesehen sein, dass das Erfassen der Farbwerte optional mehrfach hintereinander mit unterschiedlichen Einstellungen des optischen Farbmessgerätes durchgeführt wird, insbesondere bei verschiedenen Lichtverhältnissen und/oder Belichtungszeiten.

Dadurch kann erreicht werden, dass auch nur sehr geringe Farbabweichungen erkannt werden können.

Bevorzugt kann vorgesehen sein, dass das vorgegebene Digitalbildes ein Farbmodell aufweist ausgewählt aus RGB, CMY und CMYK, wobei das Farbmodell insbesondere CMYK ist.

Bevorzugt kann vorgesehen sein, dass das Verfahren ein Erstellen der Informationen über die vom Drucker zu setzende Druckpunkte umfasst, wobei Schritt b) beim Erstellen der Informationen über die vom Drucker zu setzende Druckpunkte erfolgt, insbesondere jeweils nachdem ein Druckpunkt erstellt wurde.

Darunter ist zu verstehen, dass beim RIP-Prozess des vorgegebenen Digitalbildes die Korrekturdaten erfindungsgemäß angewendet werden, wobei die Korrekturdaten nicht vor Erstellung eines Druckpunktes berücksichtigt werden sondern erst, wie vorbeschrieben, auf einen Druckpunkt angewendet werden, wenn dieser erstellt wurde.

Dadurch können vorteilhafterweise direkt beim Erstellen des zu druckenden Digitalbildes die gleichen Korrekturergebnisse erreicht werden wie mit einer Korrektur nach dem RIP-Prozess.

Bevorzugt kann vorgesehen sein, dass Drucken des farbkorrigierten farbseparierten Digitalbildes mit dem Digitaldrucker ein Drucken von Dekoren umfasst, insbesondere ein Drucken von Dekoren für Dekorpaneele.

Mit der Erfindung wird ferner eine Vorrichtung vorgeschlagen, aufweisend einen Datenspeicher, eine Recheneinheit, einen Digitaldrucker zur Ausgabe eines vorgegebenen Digitalbildes und optional ein optisches Farbmessgerät, wobei die Vorrichtung dazu eingerichtet ist das vorbeschriebene Verfahren durchzuführen.

Ferner wird eine Verwendung des vorbeschriebenen Verfahrens oder der vorbeschriebenen Vorrichtung zur Farbkorrektur für den Druck von Dekoren vorgeschlagen, insbesondere für den Druck von Dekoren für Dekorpaneele.

Es konnte überraschenderweise gezeigt werden, dass sich das vorbeschriebene Verfahren besonders gut für die Farbkorrektur bei solchen Anwendungen eignet, da insbesondere bei dem Druck von Dekorpaneelen gewährleistet werden muss, dass die Farbe zwischen unterschiedlichen Chargen möglichst nicht abweicht, da diese auch gemeinsam nebeneinander verlegt werden können und somit Farbabweichungen besonders schnell auffallen. Zudem ist für derartige Anwendungen ein hoher Durchsatz notwendig, so dass eine besonders schnelle Farbkorrektur, wie sie mit der vorliegenden Erfindung erreichbar ist, besonders vorteilhaft ist.

## Patentansprüche

1. Verfahren zur Farbkorrektur eines Digitaldruckes, wobei in einem ersten Schritt ein vorgegebenes Digitalbild einem Digitaldrucker als farbsepariertes Digitalbild mit zumindest einem Farbkanalbild bereitgestellt wird, wobei jedes Farbkanalbild einem Druckfarbkanal des Digitaldruckers zugeordnet ist und Informationen über Druckposition und Druckgröße der vom Drucker zu setzende Druckpunkte des entsprechenden Druckfarbkanals aufweist und wobei ein Druckpunkt durch seine Druckposition und Druckpunktgröße definiert ist,
wobei das Verfahren weiter die Schritte aufweist:
a) Bereitstellen von Korrekturdaten für den Digitaldruck, wobei die Korrekturdaten zumindest einen Korrekturwert für zumindest ein Farbkanalbild umfassen,
b) Anwenden der Korrekturdaten auf das farbseparierte Digitalbild, wobei ein farbkorrigiertes farbsepariertes Digitalbild erhalten wird,
c) Drucken des farbkorrigierten farbseparierten Digitalbildes mit dem Digitaldrucker, wobei der Korrekturwert auf die für das Farbkanalbild vorgesehenen Druckpunkte durch Anpassung der Druckpunktgrößen von zumindest einem Teil der Druckpunkte des Farbkanalbildes in Abhängigkeit des Korrekturwertes angewendet wird.

2. Verfahren nach Anspruch 1, wobei der Korrekturwert nicht auf die Druckpunktgröße von Druckpunkten angewendet wird, deren Druckpunktgröße 0 ist.

3. Verfahren nach einem der Ansprüche 1 oder 2, wobei die Druckpunktgrößen der Druckpunkte der Farbkanalbilder eine begrenzte Anzahl diskreter Druckpunktgrößenwerte annehmen können, insbesondere eine durch den Digitaldrucker begrenzte Anzahl.

4. Verfahren nach einem der Ansprüche 1 bis 3, wobei der Korrekturwert derart angewendet wird, dass der Korrekturwert auf die für das Farbkanalbild vorgesehenen Druckpunkte verteilt wird, wobei das Verteilen des Korrekturwertes derart erfolgt, dass der über die Summe der Druckpunkte erreichte Farbunterschied insgesamt dem Korrekturwert entspricht.

5. Verfahren nach einem der Ansprüche 3 oder 4, wobei für den Fall, dass der Druckpunktgrößenwert eines Druckpunktes beim Anwenden der Korrekturdaten kleiner werden soll als der kleinste mögliche Druckpunktgrößenwert, die Druckpunktgröße des Druckpunktes auf die Druckpunktgröße 0 gesetzt wird.

6. Verfahren nach einem der Ansprüche 3 bis 5, wobei für den Fall, dass der Druckpunktgrößenwert eines Druckpunktes beim Anwenden der Korrekturdaten größer werden soll als der größte mögliche Druckpunktgrößenwert, die Druckpunktgröße des Druckpunktes auf den größten möglichen Druckpunktgrößenwert gesetzt wird.

7. Verfahren nach einem der Ansprüche 3 bis 6, wobei beim Ändern des Druckpunktgrößenwerts der Druckpunkte des Farbkanalbildes beim Anwenden der Korrekturdaten ein Fehler-Verteilungsalgorithmus angewendet wird (Dithering), beispielsweise ein Floyd-Steinberg-Algorithmus.

8. Verfahren nach einem der Ansprüche 1 bis 7, wobei die Anwendung der Korrekturdaten auf das farbseparierte Digitalbild in Abhängigkeit einer aus zumindest einem Farbkanalbild erzeugten Dichtekarte erfolgt, wobei die Dichtekarte Informationen über eine Farbdichte des Farbkanalbildes in Abhängigkeit der Druckposition umfasst.

9. Verfahren nach Anspruch 8, wobei die Dichtekarte erstellt wurde aus dem Farbkanalbild des farbseparierten Digitalbildes, wobei vorzugsweise mit einem Weichzeichner die Farbdichte in Abhängigkeit der Druckposition des Farbkanalbildes erhalten wird.

10. Verfahren nach einem der Ansprüche 8 oder 9, wobei die Korrekturdaten auf das Farbkanalbild des farbseparierten Digitalbildes in Abhängigkeit einer Gradationskurve angewendet werden.

11. Verfahren nach einem der Ansprüche 1 bis 10, wobei der Korrekturwert abhängig von der Druckbreite des Digitaldruckers ist.

12. Verfahren nach einem der Ansprüche 1 bis 11, wobei das Bereitstellen der Korrekturdaten für den Digitaldruck in Schritt a) ein Drucken des farbseparierten Digitalbildes und/oder eines digitalen Testbildes mit dem Digitaldrucker umfasst und ein Erfassen von Farbwerten des gedruckten farbseparierten Digitalbildes und/oder digitalen Testbildes mit einem optischen Farbmessgerät, wobei die Korrekturwerte erstellt werden anhand von Abweichungen des für eine Druckposition gemessenen Farbwertes von dem für das vorgegebene Digitalbild und/oder das digitale Testbild an dieser Druckposition erwarteten Farbwert.

13. Vorrichtung aufweisend einen Datenspeicher, eine Recheneinheit, einen Digitaldrucker zur Ausgabe eines vorgegebenen Digitalbildes und optional ein optisches Farbmessgerät, wobei die Vorrichtung dazu eingerichtet ist das Verfahren nach einem der Ansprüche 1 bis 13 durchzuführen.

## Claims

1. A method for color correcting a digital print, wherein, in a first step, a specified digital image is provided to a digital printer as a color-separate digital image with at least one color channel pattern, wherein each color channel pattern is associated with a print color channel of the digital printer and has information relating to the printing position and printing size of the printing points to be placed by the printer of the corresponding print color channel, and a printing point is defined by the printing position and size thereof,
wherein the method additionally comprises the steps of:
a) providing correction data for the digital print, wherein the correction data at least comprises a correction value for at least one color channel pattern,
b) using the correction data on the color-separate digital image, wherein a color-corrected color-separate digital image is obtained,
c) printing the color-corrected color-separate digital image using the digital printer, wherein the correction value is used on the printing points intended for the color channel pattern by adjusting the printing point sizes of at least a part of the printing points of the color channel pattern depending on the correction value.

2. The method according to claim 1, wherein the correction value is not used on the size of printing points, whose size is 0.

3. The method according to any of claims 1 or 2, wherein the sizes of the printing points of the color channel patterns can assume a limited number of discrete printing point size values, in particular a number limited by the digital printer.

4. The method according to any of claims 1 to 3, wherein the correction value is used in such a way that the correction value is distributed over the printing points intended for the color channel pattern, wherein the distribution of the correction value is performed such that the color difference achieved over all of the printing points in total corresponds to the correction value.

5. The method according to any of claims 3 or 4, wherein, in the case that the printing point size value of a printing point should become smaller than the smallest possible printing point size value when using the correction data, the size of the printing point is set to 0.

6. The method according to any of claims 3 to 5, wherein, in the case that the printing point size value of a printing point should become larger than the largest possible printing point size value when using the correction data, the size of the printing point is set to the largest possible printing point size value.

7. The method according to any of claims 3 to 6, wherein, when changing the printing point size value of the printing points of the color channel pattern while using the correction data, an error distribution algorithm (dithering) is used, for example a Floyd-Steinberg algorithm.

8. The method according to any of claims 1 to 7, wherein the use of the correction data on the color-separate digital image is performed depending on a density map generated from at least one color channel pattern, wherein the density map includes information relating to the color density of the color channel pattern depending on the printing position.

9. The method according to claim 8, wherein the density map was created from the color channel pattern of the color-separate digital image, wherein the color density depending on the printing position of the color channel pattern is preferably obtained using a blurring tool.

10. Method according to any of claims 8 or 9, wherein the correction data is used on the color channel pattern of the color-separate digital image depending on a gradation curve.

11. The method according to any of claims 1 to 10, wherein the correction value depends on the printing width of the digital printer.

12. The method according to any of claims 1 to 11, wherein providing the correction data for the digital print in step a) includes printing the color-separate digital image and/or a digital test image using the digital printer and acquiring color values of the printed color-separate digital image and/or digital test image using an optical color measuring apparatus, wherein the correction values are created based on deviations of the color value measured for a printing position from the color value expected for the specified digital image and/or the digital test image at this printing position.

13. A device comprising a data storage, a computing unit, a digital printer for outputting a specified digital image, and optionally an optical color measuring apparatus, wherein the device is configured to perform the method according to any of claims 1 to 12.

## Revendications

1. Procédé de correction des couleurs d'une impression numérique, dans lequel, dans une première étape, une image numérique prédéfinie est fournie à une imprimante numérique sous la forme d'une image numérique à couleurs séparées avec au moins une image de canal de couleur, chaque image de canal de couleur étant associée à un canal de couleur d'impression de l'imprimante numérique et présentant des informations sur la position d'impression et la taille d'impression des points d'impression à définir par l'imprimante du canal de couleur d'impression correspondant, et dans lequel un point d'impression étant défini par sa position d'impression et sa taille de point d'impression,
dans lequel ce procédé comprenant en outre les étapes suivantes:
a) Mise à disposition des données de correction pour l'impression numérique, les données de correction comprenant au moins une valeur de correction pour au moins une image de canal de couleur,
b) l'application des données de correction à l'image numérique à couleurs séparées, ce qui permet d'obtenir une image numérique à couleurs séparées corrigée,
c) l'impression de l'image numérique dont les couleurs sont corrigées et séparées par des couleurs avec l'imprimante numérique, dans lequel la valeur de correction étant appliquée aux points d'impression prévus pour l'image de canal de couleur grâce à un justement des tailles de points d'impression d'au moins une partie des points d'impression de l'image de canal de couleur en fonction de la valeur de correction.

2. Procédé selon la revendication 1, dans lequel la valeur de correction n'est pas appliquée à la taille de points d'impression dont la taille est 0.

3. Procédé selon l'une des revendications 1 ou 2, dans lequel les tailles des points d'impression des images de canal de couleur peuvent prendre un nombre limité de valeurs discrètes de taille de points d'impression, en particulier un nombre limité par l'imprimante numérique.

4. Procédé selon l'une des revendications 1 à 3, dans lequel la valeur de correction est telle que la valeur de correction est répartie sur les points d'impression prévus pour l'image de canal de couleur, la répartition de la valeur de correction s'effectuant de telle sorte que la différence de couleur obtenue sur la somme des points d'impression correspond globalement à la valeur de correction.

5. Procédé selon l'une des revendications 3 ou 4, dans lequel, dans le cas où la valeur de taille de point d'impression d'un point d'impression doit devenir inférieure à la plus petite valeur de taille de point d'impression possible lors de l'application des données de correction, la taille de point d'impression du point d'impression est définiez sur la taille du point d'impression 0.

6. Procédé selon l'une des revendications 3 à 5, dans lequel, dans le cas où la valeur de taille de point d'impression d'un point d'impression doit devenir supérieure à la plus grande valeur de taille de point d'impression possible lors de l'application des données de correction, la taille de point d'impression du point d'impression est définie sur la valeur de taille de point d'impression la plus grande possible.

7. Procédé selon l'une des revendications3 à 6, dans lequel, lors de la modification de la valeur de taille des points d'impression de l'image de canal de couleur lors de l'application des données de correction, un algorithme de distribution d'erreur (tramage) est appliqué, par exemple un algorithme de Floyd-Steinberg.

8. Procédé selon l'une des revendications 1 à 7, dans lequel l'application des données de correction sur l'image numérique à couleurs séparées s'effectue en fonction d'une carte de densité générée à partir d'au moins une image de canal de couleur, la carte de densité comprenant des informations sur une densité de couleur de l'image de canal de couleur en fonction de la position d'impression.

9. Procédé selon la revendication 8, dans lequel la carte de densité a été créée à partir de l'image de canal de couleur de l'image numérique à couleurs séparées, dans lequel la densité de couleurs étant obtenue de préférence avec un flou en fonction de la position d'impression de l'image de canal de couleur.

10. Procédé selon l'une des revendications 8 ou 9, dans lequel les données de correction sont appliquées à l'image de canal de couleur de l'image numérique à couleurs séparées en fonction d'une courbe de gradation.

11. Procédé selon l'une des revendications 1 à 10, dans lequel la valeur de correction dépend de la largeur d'impression de l'imprimante numérique.

12. Procédé selon l'une des revendications 1 à 11, dans lequel la mise à disposition des données de correction pour l'impression numérique à l'étape a) comprend une impression de l'image numérique à couleurs séparées et/ou d'une image de test numérique avec l'imprimante numérique et une détection des valeurs de couleur de l'image numérique à couleurs séparées et/ou de l'image de test numérique imprimée avec un colorimètre optique, dans lequel les valeurs de correction étant établies sur la base des écarts entre la valeur de couleur mesurée pour une position d'impression et la valeur de couleur attendue pour l'image numérique et/ou l'image de test numérique prédéterminée à cette position d'impression.

13. Dispositif comportant une mémoire de données, une unité de calcul, une imprimante numérique pour la sortie d'une image numérique prédéfinie et, en option, un dispositif de mesure optique des couleurs, le dispositif étant conçu pour mettre en oeuvre le procédé selon l'une des revendications 1 à 13.
